# EUROPÄISCHE PATENTSCHRIFT

(11) **EP 1 626 835 B1**
(45) Veröffentlichungstag und Bekanntmachung des Hinweises auf die Patenterteilung: **22.07.2009**
(21) Anmeldenummer: 04739400.2
(22) Anmeldetag: 27.05.2004
(51) Int. Cl.: B23K 26/36, B23K 26/08

(54) **VERFAHREN UND VORRICHTUNG ZUR HERSTELLUNG EINES GESENKS**
METHOD AND DEVICE FOR THE PRODUCTION OF A SWAGING
PROCEDE ET DISPOSITIF PERMETTANT DE FORMER UNE CAVITE

(30) Priorität: 28.05.2003 DE 10324439
(43) Veröffentlichungstag der Anmeldung: 22.02.2006
(73) Patentinhaber: Sauer GmbH, 55758 Stipshausen (DE)
(72) Erfinder: HILDEBRAND, Peter, 87459 Pfronten (DE); REISACHER, Martin, 87435 Kempten (DE); KUHL, Michael, 87629 Füssen (DE); REINICKE, Gottfried, 87439 Kempten (DE)
(74) Vertreter: Beetz & Partner
(86) Internationale Anmeldenummer: PCT/EP2004/005731
(87) Internationale Veröffentlichungsnummer: WO 2004/105996

(56) Entgegenhaltungen:
- WO-A-00/18535
- US-A1- 2003 006 220

## Beschreibung

Die Erfindung betrifft ein Verfahren und eine Vorrichtung zur Herstellung eines Gesenks nach den Oberbegriffen der unabhängigen Patentansprüche. Ein solches Verfahren und eine solche Vorrichtung sind aus der WO 00/18535 bekannt.

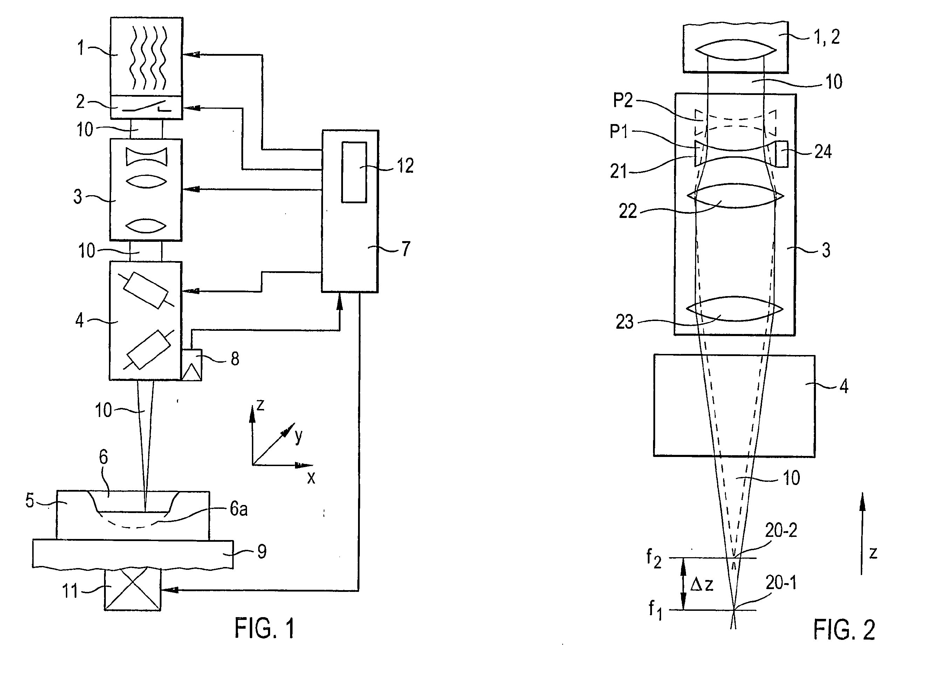

Filigrane Gesenke können mittels Laserstrahlen hergestellt werden. Figur 1 zeigt hierzu eine bekannte Vorrichtung. 1 ist eine Laserlichtquelle, 2 ein (optischer oder elektrischer) Schalter, 3 eine Fokussteuerung, 4 eine Strahlführung, 5 ein Werkstück, 6 ein Gesenk, 7 eine Steuerung, 8 ein Sensor (Tiefensensor, ortsauflösend), 9 ein Werkstücktisch, 10 ein Laserstrahl und 11 die z-Achsen-Einstellung des Werktischs. Die Zeichenebene wird als x-z-Ebene angesehen, wie schematisch gezeigt. Senkrecht auf der Zeichenebene steht die y-Achse.

Im Laser 1 wird ein Laserstrahl 10 erzeugt. 2 symbolisiert einen An/Aus-Taster, der als Güteschalter (Q-Switch) ausgelegt sein kann, sowie eine Intensitätssteuerung. Getastetes und ggf. pegelgesteuertes Laserlicht gelangt dann in die Fokussteuerung 3, die die Fokuslage in z-Richtung einstellen kann. Danach durchläuft das Laserlicht eine Strahlführung 4, die beispielsweise durch rechtwinklig zueinander stehende Spiegel gebildet sein kann. Die Spiegel können sich in bestimmten Winkelbereichen drehen und können so bewirken, daß der Auftreffpunkt des Laserstrahls 10 auf dem Werkstück 6 in der x-y-Ebene gesteuert wird.

Der Materialabtrag erfolgt durch Verflüssigen bzw. Verdampfen des Materials in der Werkstoffoberfläche. Hierzu liegt der Fokus des Laserstrahls in der Werkstückoberfläche, so daß dort hoher Flächenleistungseintrag vorliegt, so daß das Material schmilzt und verdampft und auf diese Weise entfernt wird. Der Laserstrahl wird flächendeckend über die freiliegende Oberfläche nach Maßgabe von Gesenkdaten für das herzustellende Gesenk geführt. Mit 6 ist das schon gefertigte (Teil-)Gesenk angedeutet. 6a symbolisiert die Außenfläche des gewünschten fertigen Gesenks. Der Abtrag erfolgt schichtweise. Wenn eine Schicht abgetragen wurde, wird der Werkstücktisch 9 zusammen mit dem Werkstück 5 um die Höhe entsprechend einer Schicht angehoben, so daß dann die nächste Schicht abgetragen werden kann.

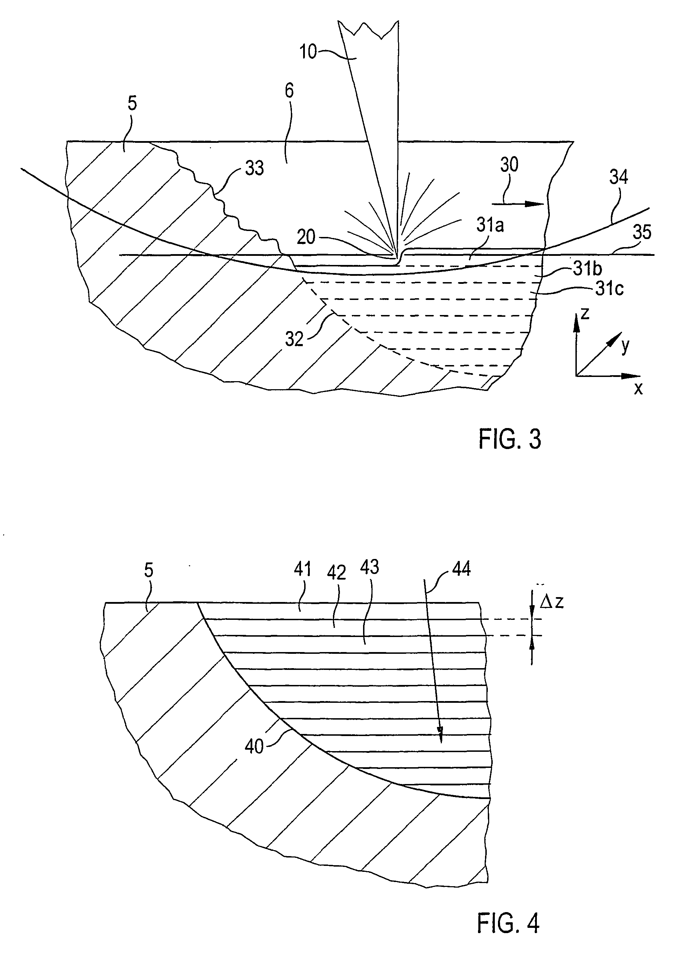

Die Fokuseinstelleinrichtung 3 dient dem Ausgleich der nicht ebenen, in der Regel kugelförmigen Kalotte, auf der der Fokus des Laserstrahls bei Auslenkung in x- und y-Richtung wandert, was bezugnehmend auf Fig. 3 genauer erläutert wird.

Die Steuerung 7 steuert die einzelnen Komponenten (Laser 1, Schalter und Intensitätssteuerung 2, Fokuseinstelleinrichtung 3, Strahlführung 4, z-Achse 11). Sie ermittelt die einzusteuernden Daten bezugnehmend auf Gesenkdaten 12, bei denen es sich beispielsweise um CAD-Daten handeln kann, und ggf. auch auf sonstige Parameter.

Figur 2 zeigt die Fokuseinstelleinrichtung 3 etwas ausführlicher. Der Laserstrahl 10 durchläuft vom Laser 1 bzw. Schalter 2 kommend zunächst eine Streulinse 21 und danach eine oder mehrere Sammellinsen 22, 23. Die Streulinse 21 ist in z-Richtung durch eine Einstelleinrichtung 24 verschiebbar. Dadurch ergeben sich unterschiedliche Strahlengänge, die dazu führen, daß sich letztendlich entsprechend der Verschiebung der Streulinse 21 auch eine Verschiebung der Fokuslage in z-Richtung ergibt. Schematisch sind zwei Strahlengänge angedeutet, nämlich einer mit durchgezogenen Linien und einer mit gestrichelten Linien. Die Linsenpositionen sind mit jeweils P1 und P2 bezeichnet. Entsprechend den unterschiedlichen Positionen P1 und P2 ergeben sich unterschiedliche Fokuslagen f1 und f2. Sie sind durch 20-1 und 20-2 bezeichnet und weichen um Δz voneinander ab. Das maximal mögliche Δz wird als Hub bezeichnet.

Figur 3 zeigt ein übliches Gesenkfertigungsverfahren und die übliche Anwendung der Fokuseinstelleinrichtung. In Figur 3 und allgemein in dieser Beschreibung bezeichnen gleiche Bezugsziffern gleiche Komponenten. 6 symbolisiert das schon teilweise gefertigte Gesenk. 31a, b und c symbolisieren die nacheinander abzutragenden Schichten. Der Laserstrahl 10 wird im gezeigten Beispiel längs Pfeilrichtung 30 längs einer bestimmten Bahn über die Fläche geführt. Im Auftreffpunkt verflüssigt bzw. verdampft das Material und wird auf diese Weise entfernt. Mit 32 ist die Außenfläche des zukünftig herzustellenden Gesenkteils bezeichnet. 33 bezeichnet die schon freigelegte Oberfläche. Da der Laser durch Drehspiegel in x- und y-Richtung geführt wird, bewegt sich sein Fokuspunkt 20 im Raum nicht auf einer Ebene, sondern auf einer im allgemeinen kugelförmige gewölbten Kalotte 34. Ohne weiteres würde dies dazu führen, daß der Laserstrahl beim Führen über die Fläche allenfalls bereichsweise mit seinem Fokus 20 in der abzutragenden Schicht liegt. In anderen Bereichen würde ein intrafokaler oder ein extrafokaler Teil des Laserstrahls auf die Materialoberfläche auftreffen, die Energiedichte wäre dann nicht hoch genug, das Material würde nicht oder nur schlecht verdampfen und demzufolge die Abtragsleistung sinken bzw. stark ungleichmäßig werden.

Um diesen Effekt auszugleichen, wird in bekannten Abtragsverfahren bzw. Abtragsvorrichtungen die Fokuseinstelleinrichtung verwendet. Sie korrigiert letztendlich die Fokuslagendifferenz zwischen der sich ohne weiteres einstellenden Kalotte 34 und der gewünschten Lage in der Ebene, wie sie durch Gerade 35 symbolisiert ist. Die Fokuseinstelleinrichtung verändert demnach die Fokuslage in z-Richtung in Abhängigkeit von der jeweils momentanen x- und y-Lage des Laserstrahls, um den Fokus auf die Ebene 35 entsprechend der momentan abgetragenen Schicht 31a einzustellen.

Wenn dann eine Schicht vollständig abgetragen ist, wird die z-Achse mechanisch um die Stärke einer Schicht nachgeführt. In Figur 1 kann dies beispielsweise durch Anheben des Werkstücktischs 9 durch Stellglied 11 erfolgen. Mit dieser Einstellung wird dann in gleicher Weise die nächste Schicht (31b) abgetragen. Nachteil dieses Verfahrens ist es, daß das mechanische Nachführen des Gesenks in z-Richtung zeitaufwendig ist. Dies wirkt sich insbesondere bei kleinen Gesenken aus, wo die Stellzeit in z-Richtung im Vergleich zur Bearbeitungszeit zum Abtrag einer Schicht vergleichsweise groß ist.

Figur 3 zeigt einen weiteren Nachteil des bekannten schichtweisen Abtrags: Mit 32 ist die gewünschte (theoretische) Außenfläche des zuletzt herzustellenden Gesenks symbolisiert. Aufgrund des schichtweisen Abtrags ergibt sich aber tatsächlich ein nicht idealer, sondern realer Verlauf, wie dies bei 33 gezeigt ist: Die Wand verläuft wegen des schichtweisen Abtrags stufig, wobei die Stufenhöhe der Schichtdicke entspricht. Je nach gewünschter Qualität der Gesenkaußenfläche kann dies als mehr oder minder starker Nachteil empfunden werden.

Die US 2003/0006220 A1 beschreibt ein Verfahren zum Fertigen einer Öffnung in einem harten, nichtmetallischen Substrat. Es ist zumindest eine Laseranordnung vorgesehen, die einen Laserstrahl erzeugen kann, dessen Fokus beweglich ist.

Aufgabe der Erfindung ist es, ein Verfahren und eine Vorrichtung zur Herstellung eines Gesenks anzugeben, die bei schichtweisem Materialabtrag die variable Gesenkbildung und auch hohe Oberflächengüten bei der Gesenkbildung erlauben.

Diese Aufgabe wird mit den Merkmalen der unabhängigen Patentansprüche gelöst. Abhängige Patentansprüche sind auf bevorzugte Ausführungsformen der Erfindung gerichtet.

Bei einem Verfahren zur Herstellung eines Gesenks in einem Werkstück wird ein Laserstrahl durch eine Strahlführung über die Werkstückfläche geführt, wobei er eine Fokussteuerung durchläuft, die die Fokuslage des Laserstrahls so steuert, dass sie zumindest zeitweise in Tiefenrichtung des Gesenks variabel ist. Der Abtrag ist schichtweise und flächendeckend. Eine Schicht ist uneben.

Nachfolgend werden bezugnehmend auf die Zeichnungen einzelne Ausführungsformen der Erfindung beschrieben. Es zeigen:
- Fig. 1: schematisch den Aufbau einer Vorrichtung zur Gesenkherstellung,
- Fig. 2: den Strahlengang, insbesondere in einer Fokuseinstelleinrichtung,
- Fig. 3: ein bekanntes Verfahren,
- Fig. 4: eine Skizze zur Erläuterung eines nicht-erfindungsgemäßen Verfahrens,
- Fig. 5: eine Sizze zur Erläuterung eines ersten erfindungsgemäßen Verfahrens,
- Fig. 6: eine Skizze zur Erläuterung eines weiteren erfindungsgemäßen Verfahrens,
- Fig. 7: eine Sizze zur Erläuterung eines weiteren erfindungsgemäßen Verfahrens, und
- Fig. 8: eine Sizze zur Erläuterung eines weiteren erfindungsgemäßen Verfahrens.

Das erfindungsgemäße Verfahren kann durch geeignete Auslegung der Steuerung 7 in Fig. 1 bzw. durch geeignete Ansteuerung der Fokuseinstelleinrichtung 3 in Figuren 1 und 2 umgesetzt werden. In Fig. 4 ist schematisch ein "Schichtplan" für ein herzustellendes Gesenk gezeigt.

Die Gesenkhorstellung erfolgt durch schichtweisen Abtrag in ebenen Schichten, so daß der "Schichtplan" nach Figure 4 nicht alle Merkmale der Erfindung enthält.

40 symbolisiert die Außenfläche des zuletzt gewünschten Gesenks. 41 ist eine der Schichten, die abzutragen sind, und darunter folgen weitere Schichten 42, 43, .... Gearbeitet wird also letztendlich in Richtung des Pfeils 44 durch schichtweisen Abtrag. Das Anfahren einer folgenden Schicht nach Abtrag einer Schicht kann durch Verändern der Fokuslage durch die Fokuseinstelleinrichtung 3 (veranlaßt von Steuerung 7) erfolgen. Nach dem Abtrag einer Schicht wird also insgesamt der Fokus um Δz nach unten in Fig. 4 verlegt, indem die Fokuseinstelleinrichtung 3 geeignet angesteuert wird, und es wird dann die folgende Schicht abgetragen. Bei diesem Abtrag kann dann wieder in bekannter Weise ein Fokuslagenausgleich in z-Richtung, wie bezugnehmend auf Fig. 3 beschrieben, erfolgen. Das Nachführen der Fokuslage zu den einzelnen Schichten 41, 42, 43, ... kann so oft erfolgen, wie dies der verfügbare Hub der Fokuseinstelleinrichtung 3 zuläßt. Ein bestimmter Teil des Hubs wird ggf. zum Fokuslagenausgleich wie in Fig. 3 beschrieben benötigt. Der darüber hinaus verfügbare Teil des Hubs kann zur Ansteuerung der einzelnen Schichten verwendet werden. Wenn dann der maximal mögliche Hub insgesamt erreicht ist, kann nach mehreren Schichten eine mechanische Nachführung längs der z-Achse erfolgen (Stellglied 11 in Fig. 1). Dann können wieder mehrere Nachführungen zu mehreren Schichten durch Fokuslageneinstellung um Δz erfolgen.

Somit können insgesamt abwechselnd eine mechanische Nachführung und eine oder mehrere Nachführungen durch Fokuslageneinstellung erfolgen. Beispielsweise können (wenn der verfügbare Hub der Fokuseinstelleinrichtung 3 dies erlaubt) 20 Schichten nacheinander durch entsprechende Nachführung der Fokuslage angesteuert werden. Dann wird eine mechanische Nachführung längs z-Richtung um die Stärke von 21 Schichten vorgenommen und es können dann wieder mehrere, z.B. 20, Schichten durch Fokuslageneinstellung angesteuert werden.

Da die Fokuslageneinstellung wesentlich schneller ist als die mechanische Nachführung längs der z-Achse (wobei bei letzterem nicht die Verfahrzeit die wesentliche Größe ist, sondern das Initialisieren der notwendigen Steuerungsschritte und darauf folgend das abermalige Umschalten hin auf die Abtragssteuerung), kann somit insgesamt Zeit gespart werden.

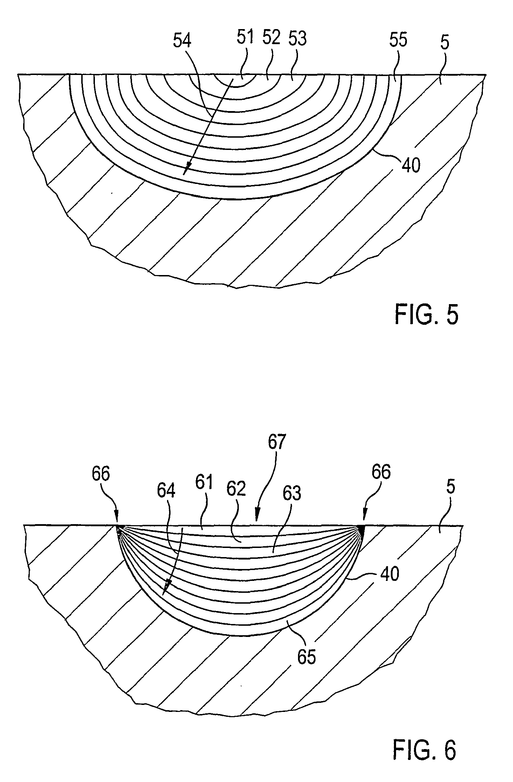

Fig. 5 zeigt eine erfindungsgemäße Vorgehensweise. Der Abtrag erfolgt nicht mehr in ebenen Schichten, sondern in unebenen Schichten 51, 52, 53, .... Gearbeitet wird von Schicht zu. Schicht längs der Richtung des Pfeils 54. Die Schichten können, wie gezeigt, der Außenfläche 40 des zuletzt herzustellenden Gesenks folgend oder ähnelnd gestaltet sein, beispielsweise indem sie hierzu einen sich von Schicht zu Schicht ändernden, aber innerhalb einer Schicht konstanten vorgegebenen Abstand haben ("außenflächenparallel" sind), der also in Annäherung der Außenfläche 40 von Schicht zu Schicht geringer wird. Diese einzelnen Schichten werden aus den Gesenkdaten 12 in der Steuerung 7 errechnet und dann einerseits durch die Strahlführung 4 und andererseits durch die kontinuierliche Fokussteuerung 3 eingesteuert. Die Strahlführung 4 bewirkt die Steuerung des Laserstrahls in x- und y-Richtung, während die Fokuseinstelleinrichtung 3 die Fokuslage in z-Richtung so steuert, daß sie bezüglich der gerade abgetragenen Schicht eine definierte Lage hat, beispielsweise in ihr liegt.

In diesem Zusammenhang wird darauf hingewiesen, daß die Veränderung der Fokuslage in z-Richtung auch eine Beeinflussung der x- und y-Koordinate des Auftreffpunkts des Fokus bewirken kann, nämlich dann, wenn der Laserstrahl nicht parallel zur z-Achse auf die Gesenkoberfläche einfällt. Dies wird durch die Steuerung bzw. bei der Ermittlung der Ansteuerungsdaten in geeigneter Weise berücksichtigt.

Die Fokuslageneinstellung kann man sich theoretisch aus zwei überlagerte Komponenten zusammengesetzt denken, nämlich zum einen aus der Steuerung nach Maßgabe der gewünschten Form der abzutragenden Schicht und zum anderen der Steuerung zum Kalottenausgleich wie Bezug nehmend auf Fig. 3 beschrieben. Rechnerisch gesehen können diese Komponenten getrennt oder einheitlich ermittelt werden.

Die einzelnen Schichten können im Vergleich zueinander konstante oder unterschiedliche Dicken haben. Insbesondere können außenflächennahe Schichten dünner sein als außenflächenferne Schichten. Auch eine einzelne Schicht kann, muß aber nicht, konstante Dicke haben.

Fig. 6 zeigt eine Ausführungsform, bei der ein schichtweiser Abtrag so erfolgt, daß zuletzt (an der Außenfläche 40) auch wieder "außenflächenparallele" Schichten 65 gefertigt werden. Allgemein handelt es sich um Schichten 61, 62, 63, die nacheinander längs Pfeilrichtung 64 abgetragen werden und die jeweils in sich variable Schichtdicken haben, insbesondere in der Form, daß die Schichtdicke an den Rändern 66 des Gesenks kleiner ist als in der Mitte 67 des Gesenks.

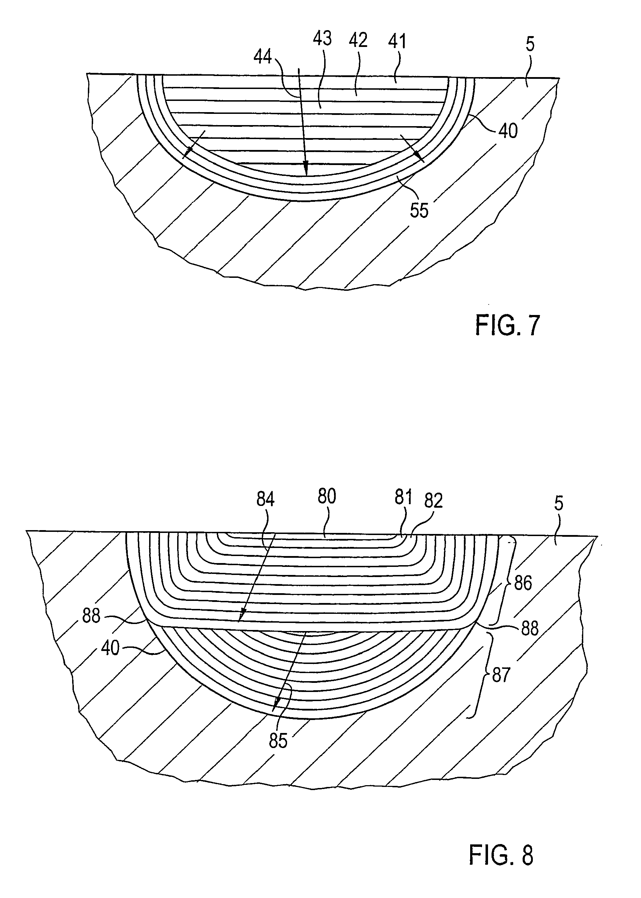

Fig. 7 zeigt eine Ausführungsform, in der verschiedene Abtragsmethoden gemischt eingesteuert werden. Wenn sich das Gesenk der Außenfläche 40 des zuletzt herzustellenden Gesenks nähert, kann mit außenflächenparallelen Schichten 55 der Materialabtrag zur Gesenkbildung erfolgen, um auf diese Weise eine glatte Außenfläche 40 zu erhalten. Eine solche Außenfläche weist dann nicht die in Fig. 3 bei Bezugsziffer 33 gezeigte Stufung auf. Vorher kann aber beispielsweise ein schnelleres, gröberes Abtragsverfahren gewählt werden, beispielsweise eines wie bezugnehmend auf Fig. 4 oder Fig. 6 beschrieben. Fig. 7 zeigt letztendlich eine Mischform aus Fig. 4 und Fig. 6. Anfänglich wird gemäß dem Verfahren in Fig. 4 gearbeitet. Es können hier relativ dicke Schichten (z.B. 3-20 µm) abgetragen werden, wobei der Abtrag auch in den einzelnen Schichten nicht bis zur jeweils eigentlich zugänglichen Außenfläche des fertigen Gesenks erfolgt, sondern vorher ("weiter innen" im Gesenk) stehenbleibt. Dies ist durch die einzelnen Schichten 41, 42, 43, ... längs Pfeilrichtung 44 (Arbeitsrichtung) symbolisiert. Dieses Vorgehen kann innerhalb jeder Schicht bzw. allgemein bei einem bestimmten Abstand zur Außenfläche 40 des fertigen Gesenks abgebrochen werden, und es kann dann zur außenflächenparallelen Bearbeitung, wie vorher beschrieben, mit relativ dünnen Schichten (1-3 µm) übergegangen werden.

Man kombiniert auf diese Weise den Vorteil des schnellen Abtrags in groben Schichten mit dem der genauen Fertigung der Außenfläche durch außenßächenparallele Schichten am Ende der Gesenkfertigung, die zumindest ganz außen relativ dünn sein können. Anstelle ebener, paralleler Schichten in Fig. 4 oder auch im ersten Abschnitt der Fig. 7 können auch Schichten eingesteuert werden, die auf der Fokuskalotte der Fokussteuerung liegen. Es ist dann die fortwährende Fokussteuerung und der dementsprechende Rechen- und Ansteuerungsaufwand nicht notwendig.

Fig. 8 zeigt eine Ausführungsform, bei der mehrere oder alle abzutragenden Schichten auch nach Maßgabe des verfügbaren Hubs der Fokuseinstellung bestimmt sind. Bei tiefen Gesenken kann es vorkommen, daß der verfügbare Hub der Fokuseinstellung nicht ausreicht, um die Außenfläche 40 des Gesenks in z-Richtung vollständig abzufahren. Das Gesenk wird dann logisch in einzelne Abschnitte 86, 87 und dementsprechend in Fertigungsabschnitte 84, 85 unterteilt, die in sich als Teilgesenke angesehen werden können und die jeweils in sich innerhalb des verfügbaren Hubs der Fokussteuerung vollständig angefahren werden können. Jeweils innerhalb des entsprechenden Segments 86, 87 kann dann wieder, wie bezugnehmend auf Figuren 5 bis 7 beschrieben, vorgegangen werden. Fig. 8 zeigt eine Ausführungsform, bei der die einzelnen "Teilgesenke" 86, 87 jeweils wie in Fig. 5 beschrieben bearbeitet werden. Die Teilgesenke sind so definiert, daß sie jeweils innerhalb eines Hubs der Fokuseinstelleinrichtung 3 gefertigt werden können, wobei hierbei ggf. der für den Kalottenausgleich nötige Teil des Hubs berücksichtigt werden kann, insbesondere in der Weise, dass er nicht für die Bildung des Gesenks in Tiefenrichtung zur Verfügung steht. Dieses Vorgehen hat den Vorteil daß nur an den "Nahtstellen" 88 der Teilgesenke Unstetigkeiten an der Außenfläche 40 auftreten können, da im übrigen wieder außenflächenparallel gearbeitet werden kann. Anstelle der Bearbeitung der Teilgesenke 86 und 87 entsprechend Fig. 5 können auch Bearbeitungen entsprechend Fig. 6 oder Fig. 7 dieser Teilgesenke erfolgen.

Der Tiefensensor 8 ist vorzugsweise ein ortsauflösender Tiefensensor. Er kann die jeweilige Tiefe, Abmessung in z-Richtung für einzelne x-y-Positionen ermitteln. Vorzugsweise geschieht dies in Echtzeit, beispielsweise durch geeignete Auswertung des Prozeßleuchtens am jeweils momentanen Arbeitspunkt des Laserstrahls. Es entsteht dadurch eine "Landkarte", die in Abhängigkeit von den jeweiligen x- und y-Koordinaten die jeweilige Gesenktiefe angibt. Auch bezugnehmend auf diese Meßdaten können Einstellungen auch der Fokussteuerung vorgenommen werden.

Allgemein kann die Steuerung der Stärke des momentanen Abtrags durch Steuerung der Laserleistung oder allgemein von Laserparametern (Leistung, Tastung, Führungsgeschwindigkeit, ...) erfolgen. Diese Steuerung der Abtragsleistung kann ortsvariabel sein, insbesondere in Abhängigkeit von der momentanen x- und y-Koordinate.

## Patentansprüche

1. Verfahren zur Herstellung eines Gesenks in einem Werkstück, bei dem zur Bildung des Gesenks ein Laserstrahl durch eine Strahlführung über die Werkstückfläche geführt wird, wobei die Gesenkherstellung durch schichtweisen Abtrag erfolgt,
**dadurch gekennzeichnet, daß**
die Fokuslage des Laserstrahls so gesteuert wird, daß sie zumindest zeitweise in Tiefenrichtung des Gesenks variabel ist, und
der Abtrag zumindest teilweise in nicht ebenen Schichten erfolgt.

2. Verfahren nach Anspruch 1, **dadurch gekennzeichnet, daß** die Fokuslage des Laserstrahls so gesteuert wird, daß sie bezüglich der momentan abgetragenen Schicht eine definierte Lage hat.

3. Verfahren nach Anspruch 2, **dadurch gekennzeichnet, daß** der Übergang von einer Schicht auf eine folgende Schicht durch Steuerung der Fokuslage des Laserstrahls erfolgt.

4. Verfahren nach Anspruch 1, **dadurch gekennzeichnet, daß** zumindest teilweise der Abtrag in Schichten erfolgt, die der Außenfläche des fertigen Gesenks folgen oder ähneln oder die außenflächenparallel sind.

5. Verfahren nach einem oder mehreren der Ansprüche 1 bis 4, **dadurch gekennzeichnet, daß** die Fertigung des Gesenks in einem ersten Abschnitt durch Abtrag von Schichten erfolgt, die nicht die Außenfläche des fertigen Gesenks erreichen, und in einem zweiten Abschnitt durch Abtrag von nicht ebenen Schichten, die der Außenfläche des fertigen Gesenks ähneln oder ihr folgen oder die außenflächenparallel sind.

6. Verfahren nach einem oder mehreren der Ansprüche 1 bis 5, **dadurch gekennzeichnet, daß** der Abtrag in Schichten mit nicht konstanter Dicke erfolgt.

7. Verfahren nach Anspruch 6, **dadurch gekennzeichnet, daß** die Dicke einer Schicht an ihrem Rand geringer ist als in der Mitte.

8. Verfahren nach einem oder mehreren der Ansprüche 1 bis 7, **dadurch gekennzeichnet, daß** die einzelnen Schichten auch nach Maßgabe des verfügbaren Hubs der Fokuseinstellung ermittelt werden.

9. Verfahren nach Anspruch 8, **dadurch gekennzeichnet, daß** Schichten so ermittelt werden, daß sie innerhalb des Hubs der Fokuseinstellung einsteuerbar sind.

10. Verfahren nach einem oder mehreren der vorherigen Ansprüche, **dadurch gekennzeichnet, daß** die Fokuslage des Laserstrahls in Tiefenrichtung des Gesenks nach Maßgabe der gewünschten Abtragsleistung gesteuert wird.

11. Verfahren nach einem oder mehreren der Ansprüche 1 bis 10, **dadurch gekennzeichnet, dass** zumindest teilweise Schichten so ermittelt und abgetragen werden, dass sie auf der Kalotte liegen, auf der sich der Fokus des Laserstrahls bewegt, wenn der Laserstrahl durch die Strahlführung geführt wird.

12. Vorrichtung zur Herstellung eines Gesenks (6) in einem Werkstück (5), insbesondere zur Durchführung des Verfahrens nach einem oder mehreren der vorherigen Ansprüche, mit
• einer Laserlichtquelle (1) zur Erzeugung eines Laserstrahls für den Materialabtrag,
• einer Fokuseinstelleinrichtung (3) zum Einstellen der Fokuslage des Laserstrahls,
• einer Strahlführung (4) zur Führung des Laserstrahls (20) über die Werkstückfläche, und
• einer Steuerung (7) zur Steuerung der Fokuseinstelleinrichtung (3) und der Strahlführung (4), so daß die Gesenkherstellung durch Schichtweisen Abtrag erfolgt,
**dadurch gekennzeichnet, daß**
die Steuerung dazu ausgelegt ist, die Fokuslage des Laserstrahls über die Fokuseinstelleinrichtung (3) zumindest zeitweise auf veränderliche Werte in Tiefenrichtung des Gesenks zu steuern, und so zu steuern, dass der Abtrag zumindest teilweise in nicht ebenen Schichten erfolgt.

13. Vorrichtung nach Anspruch 12, **gekennzeichnet durch** einen Sensor (8) zur Tiefenmessung im Gesenk (6), wobei die Steuerung dazu ausgelegt ist, die Abtragsleistung des Laserstrahls nach Maßgabe der Sensorausgabe zu steuern.

## Claims

1. Method for producing a swaging in a workpiece, wherein a laser beam is guided through a beam guide over the surface of the workpiece in order to form the swaging, wherein the swaging is produced by ablation in layers,
**characterised in that**
the focus position of the laser beam is controlled such that it is variable at least temporarily in the depth direction of the swaging, and
the ablation is effected at least partly in non-planar layers.

2. Method as claimed in Claim 1, **characterised in that** the focus position of the laser beam is controlled such that it has a defined position with respect to the layer being ablated at that moment.

3. Method as claimed in Claim 2, **characterised in that** the transition from one layer to a subsequent layer is effected by controlling the focus position of the laser beam.

4. Method as claimed in Claim 1, **characterised in that** the ablation is effected at least partly in layers which follow or are similar to the outer surface of the finished swaging or are in parallel with the outer surface.

5. Method as claimed in any one or several of Claims 1 to 4, **characterised in that** the swaging is produced in a first section by the ablation of layers which do not reach the outer surface of the finished swaging and in a second section by the ablation of non-planar layers which are similar to or follow the outer surface of the finished swaging or are in parallel with the outer surface.

6. Method as claimed in any one or several of Claims 1 to 5, **characterised in that** the ablation is effected in layers having a non-constant thickness.

7. Method as claimed in Claim 6, **characterised in that** a layer is thinner at its edge than in the centre.

8. Method as claimed in any one or several of Claims 1 to 7, **characterised in that** the individual layers are also established in accordance with the available stroke of the focus adjustment.

9. Method as claimed in Claim 8, **characterised in that** layers are established such that they can be controlled within the stroke of the focus adjustment.

10. Method as claimed in any one or several of the preceding Claims, **characterised in that** the focus position of the laser beam is controlled in the depth direction of the swaging in accordance with the desired ablation performance.

11. Method as claimed in any one or several of Claims 1 to 10, **characterised in that** layers are at least partly established and ablated such that they lie on the spherical cap on which the focus of the laser beam moves when the laser beam is guided through the beam guide.

12. Device for producing a swaging (6) in a workpiece (5), in particular for carrying out the method as claimed in any one or several of the preceding Claims, having
- a laser light source (1) for producing a laser beam for the material ablation,
- a focus adjustment unit (3) for adjusting the focus position of the laser beam,
- a beam guide (4) for guiding the laser beam (20) over the surface of the workpiece, and
- a controller (7) for controlling the focus adjustment unit (3) and the beam guide (4) so that the swaging is produced by ablation in layers,
**characterised in that**
the controller is designed to control the focus position of the laser beam via the focus adjustment unit (3) at least temporarily to variable values in the depth direction of the swaging and to control it such that the ablation is effected at least partly in non-planar layers.

13. Device as claimed in Claim 12, **characterised by** a sensor (8) for measuring the depth in the swaging (6), wherein the controller is designed to control the ablation performance of the laser beam in accordance with the sensor output.

## Revendications

1. Procédé permettant de former une cavité dans une pièce à usiner, dans lequel, pour former la cavité, un rayon laser est guidé au-dessus de la surface de la pièce à usiner par le biais d'un système de guidage de faisceau, la formation de la cavité s'effectuant par enlèvement par couches,
**caractérisé en ce que**
la focalisation du rayon laser est commandée de manière à être variable au moins de manière temporaire en direction de la profondeur de la cavité, et
l'enlèvement s'effectue au moins partiellement en couches non planes.

2. Procédé selon la revendication 1, **caractérisé en ce que** la focalisation du rayon laser est commandée de manière à avoir une position définie en ce qui concerne la couche enlevée momentanément.

3. Procédé selon la revendication 2, **caractérisé en ce que** le passage d'une couche à une autre couche s'effectue par le biais de la commande de la focalisation du rayon laser.

4. Procédé selon la revendication 1, **caractérisé en ce que** l'enlèvement s'effectue au moins partiellement en couches qui suivent ou imitent la surface externe de la cavité finie ou sont parallèles aux surfaces externes.

5. Procédé selon une ou plusieurs des revendications 1 à 4, **caractérisé en ce que** la formation de la cavité s'effectue dans une première section par enlèvement de couches qui n'atteignent pas la surface externe de la cavité finie, et dans une deuxième section par enlèvement de couches non planes, qui imitent la surface externe de la cavité finie ou la suivent ou sont parallèles aux surfaces externes.

6. Procédé selon une ou plusieurs des revendications 1 à 5,
**caractérisé en ce que** l'enlèvement s'effectue en couches n'ayant pas une épaisseur constante.

7. Procédé selon la revendication 6, **caractérisé en ce que** l'épaisseur d'une couche est plus faible sur sa bordure qu'au milieu.

8. Procédé selon une ou plusieurs des revendications 1 à 7, **caractérisé en ce que** les différentes couches sont déterminées également en fonction de l'amplitude disponible du réglage du foyer.

9. Procédé selon la revendication 8, **caractérisé en ce que** les couches sont déterminées de manière à être réglables dans l'amplitude de réglage du foyer.

10. Procédé selon une ou plusieurs des revendications précédentes,
**caractérisé en ce que** la focalisation du rayon laser dans la direction de la profondeur de la cavité est commandée en fonction de la puissance d'enlèvement voulue.

11. Procédé selon une ou plusieurs des revendications 1 à 10, **caractérisé en ce que** les couches sont au moins partiellement déterminées et enlevées de manière à résider sur la calotte, au-dessus de laquelle se déplace le foyer du rayon laser, quand le rayon laser est guidé par le système de guidage de faisceau.

12. Dispositif permettant de former une cavité (6) dans une pièce à usiner (5), permettant notamment de réaliser le procédé selon une ou plusieurs des revendications précédentes, comprenant
• une source de lumière laser (1) destinée à produire un rayon laser pour l'enlèvement de la matière,
• un système de réglage du foyer (3) pour régler la focalisation du rayon laser,
• un système de guidage de faisceau (4) pour guider le rayon laser (20) au-dessus de la surface de la pièce à usiner, et
• une commande (7) pour commander le système de réglage du foyer (3) et le système de guidage de faisceau (4) afin que la formation de la cavité se fasse par enlèvement par couches,
**caractérisé en ce que**
la commande est conçue de manière à commander la focalisation du rayon laser par le biais du système de réglage du foyer (3) au moins temporairement selon des valeurs variables dans la direction de la profondeur de la cavité et à commander de manière à ce que l'enlèvement se fasse au moins partiellement en couches non planes.

13. Dispositif selon la revendication 12, **caractérisé par** un capteur (8) pour la mesure de profondeur dans la cavité (6), où la commande est conçue de manière à commander la puissance d'enlèvement du rayon laser en fonction des données émises par le capteur.
